# EUROPEAN PATENT APPLICATION

(11) **EP 2 362 370 A2**
(43) Date of publication of application: **31.08.2011**
(21) Application number: 11155198.2
(22) Date of filing: 21.02.2011
(51) Int. Cl.: G09F 13/08, G09F 3/02, G09F 19/12

(54) **Two-side printing structure, dial using the same and printing method of two-side printing structure**

(30) Priority: 26.02.2010 JP 2010041683
(71) Applicant: Calsonic Kansei Corporation, Saitama-shi Saitama 331-8501 (JP)
(72) Inventor: Yasukawa, Tokuji, Saitama 331-8501 (JP)
(74) Representative: Ilgart, Jean-Christophe

(57) **Abstract**

A two-side printing structure has a base material (101) including a first face (101a) and a second face (101b) located on a side opposite to the first face (101a), a print (103) having a print layer provided on the first face (101a) of the base member (101) by thermal transfer printing and a print (3) having a print layer provided on the second face (101b) of the base member (101) by thermal transfer printing.

## Description

### BACKGROUND OF THE INVENTION

### Field of the Invention

The present invention relates to a two-side printing structure for a display unit such as a meter mainly used in a vehicle, for example, an automobile, in particular, to a two-side printing structure in which a base material has preferable dimensional accuracy after printing, a dial using the same and a printing method of a two-side printing structure.

### Description of the Related Art

A dial used in a display unit of an automobile, a printing structure used in the dial and a printing method of the dial illustrated in FIGs. 7, 8A-8D are known in the prior art (for example, refer to JP 2008-256996A, JP 2008-257054A).

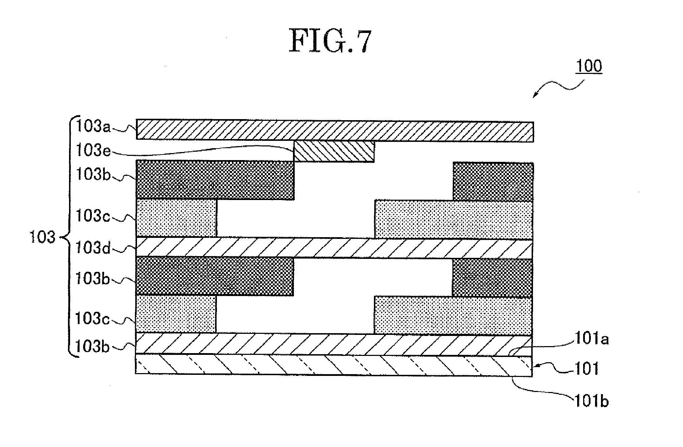

At first, the configuration of the prior art will be described. In the conventional printing structure of a dial 100, as illustrated in FIG. 7, a print 103 is transferred to one side face 101 a of a transparent PC sheet 101 as a base material.

This print 103 includes a plurality of print layers 103a-103e each having a different color or a similar color. These print layers 103a-103e are laminated in a state in which parts of layers are overlapped.

Illumination light from the side of the one side 101a which is the print face, or the other side face 101b which is the back face of the PC sheet 101 of the dial 100 is transmitted to the side of the other side face 101b or the one side face 101a, or is reflected by the other side face 101b or the one side face 101a, is adjusted to desired colors by the respective print layers 103a-103e, and, as the colors of the transmitted illumination light of the dial 100, is visualized by a passenger in a passenger compartment as at least a part of a design face of the display unit.

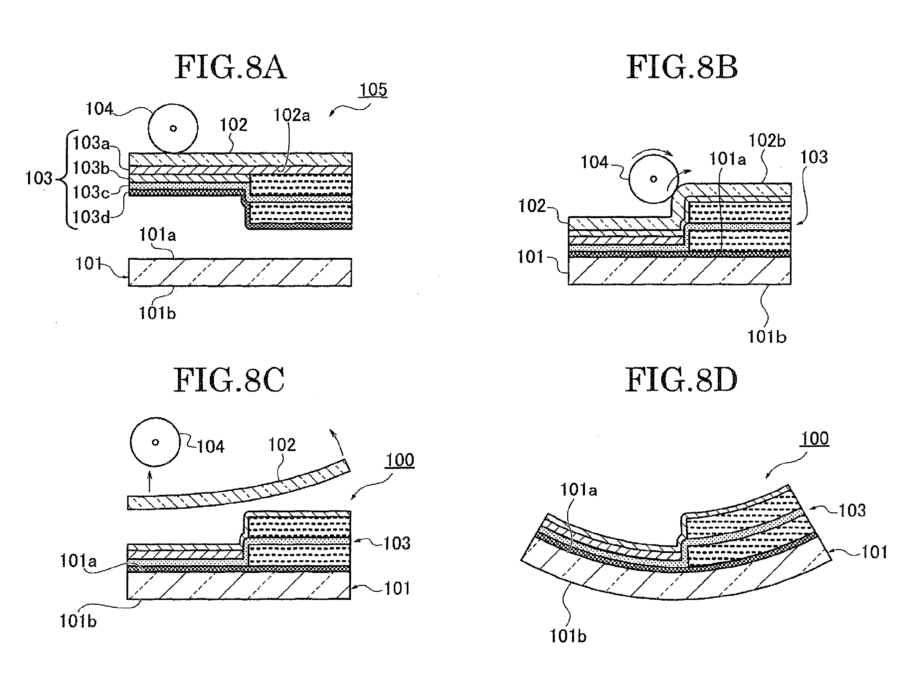

Next, a thermal transfer printer 105, which thermally transfers a thermal transfer printing structure of the conventional print 103 to the one side face 101a of the PC sheet 101, and a one-side printing method by the thermal transfer printer 105 will be described with reference to print steps illustrated in FIGs. 8A-8D.

In the conventional thermal transfer printing structure as described above, at first, as illustrated in FIG. 8A, the PC sheet 101 is attached to the thermal transfer printer 105 using one thermal transfer roller 104, and the print 103 having a plurality of print layers 103a-103e is transferred to the one side face 101a of the PC sheet 101 from a transfer face 102a of a PET intermediate transfer film 102 in which the print layers 103a-103e are laminated in reverse order.

In this case, as illustrated in FIG. 8B, the thermal transfer roller 104 rotates while pressing an external surface 102b of the intermediate transfer film 102 under heated conditions.

The transfer face 102a of the intermediate transfer film 102 is thereby pressed to the softened one side face 101 a of the PC sheet 101.

Accordingly, the print 103 having the print layers 103a-103e laminated on the transfer face 102a is fixed by applying pressure to the one side face 101 a of the PC sheet 101 to be transferred.

After fixing by applying pressure, as illustrated in FIG. 8C, the thermal transfer roller 104 is detached, and the intermediate transfer film 102 is removed in a cooling step. Thereby, the print 103 is separated from the transfer face 102a softened by the heat of the thermal transfer roller 104, and the transfer to the one side face 101 a of the PC sheet 101 is substantially completed.

In the conventional printing structure of the dial as described above, the intermediate transfer film 102 is pressed to the one side face 101a of the PC sheet 101 by the heated thermal transfer roller 104 provided on the side of the one side face 101 a of the PC sheet 101 .

Then, the print 103 of the intermediate transfer film 102 is pressed so as to be transferred onto the one side face 101 a.

In this case, since the other side face 101b of the PC sheet 101 is not heated, it does not expand.

For this reason, if the heated thermal transfer roller 104 which heats and presses the one side face 101a is detached, the one side face 101a contracts by cooling the one side face 101 a until it gets a normal temperature.

In this case, since the other side face 101b does not contract, in a normal temperature state, the two-side faces 101a, 101b differ in dimension, and the PC sheet 101 may recurve with the one side face 101a being curved inwardly as illustrated in FIG. 8D.

Then, the recurved dial 100 after being printed and cooled is attached to the display unit and the like in an automobile under an internal stress, and is constantly pressed from the attached portion.

For this reason, low sound is caused between the dial 100 and the portion which attaches and supports the dial 100, cracks are caused, and the design face of the dial 100 bends, thus deteriorating the quality of the external appearance.

### SUMMARY OF THE INVENTION

It is, therefore, an object of the present invention to provide a two-side printing structure which can improve the outer appearance quality in which a base material does not recurve and bend even if thermal transfer printing is performed, a dial using the same and a printing method of the two-side printing structure.

In order to achieve the above object, an embodiment of the present invention provides a two-side printing structure, comprising: a base material including a first face and a second face located on a side opposite to the first face; a print having a print layer provided on the first face of the base member by thermal transfer printing; and a print having a print layer provided on the second face of the base member by thermal transfer printing.

An embodiment of the present invention also provides a printing method of a two-side printing structure includes the steps of providing a print on a first face of a base material by thermal transfer printing; and providing a print on a second face located on a side opposite to the first face of the base material by thermal transfer printing.

### BRIEF DESCRIPTION OF THE DRAWINGS

The accompanying drawings are included to provide further understanding of the invention, and are incorporated in and constitute a part of this specification. The drawings illustrate embodiments of the invention and, together with the specification, serve to explain the principle of the invention.
FIG. 1 is a schematic longitudinal sectional view illustrating a lamination order of print layers constituting a main portion of a print in a two-side printing structure of a dial according to an embodiment of the present invention.
FIG. 2 is a schematic perspective view illustrating a main portion when thermally transferring the print onto one side face of a PC sheet in a two-side printing structure according to Embodiment 1 of the present invention.
FIG. 3 is a schematic perspective view illustrating recurve when thermally transferring the print to the one side face of the PC sheet in the two-side printing structure according to Embodiment 1 of the present invention.
FIG. 4 is an enlarged perspective view illustrating a recurve mechanism generated in a cooling step after thermally transferring the print onto the PC sheet by two-side printing as a comparative example of the two-side printing structure of the present invention.

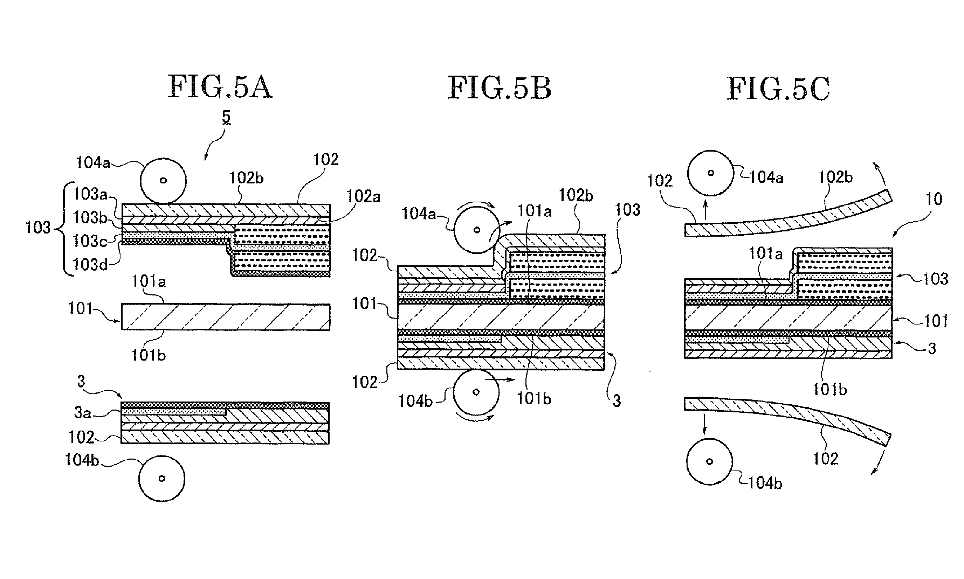

FIGs. 5A-5C are views each illustrating a manufacturing step which thermally transfers the print by two thermal transfer rollers at the same time in the two-side print structure according to Embodiment 1 of the present invention; FIG. 5A is a longitudinal sectional view of a main portion illustrating a state in which a base material and two intermediate transfer films each including a print having print layers are attached to a two-side printer, FIG. 5B is a longitudinal sectional view of a main portion illustrating thermal transferring by the two thermal transfer rollers, and FIG. 5C is a longitudinal sectional view illustrating a state in which the intermediate transfer films are separated.

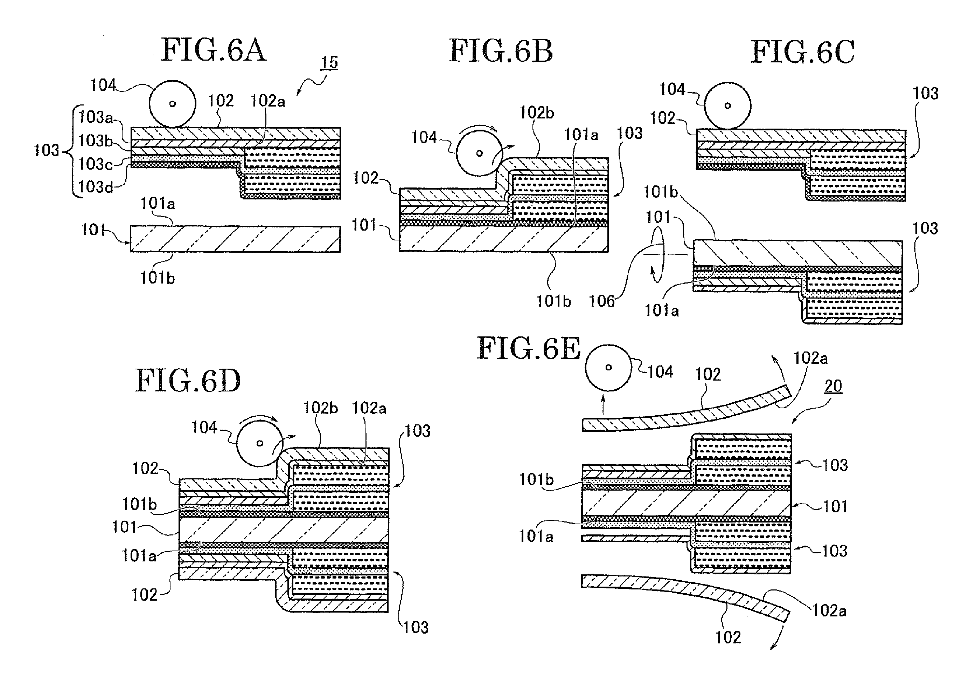

FIGs 6A-6E are views each illustrating a two-side printing structure according to Embodiment 2 of the present invention; FIG. 6A is a longitudinal sectional view of a main portion illustrating a state in which a base material and an intermediate transfer film provided with a print having print layers are attached to a two-side printer, FIG. 6B is a longitudinal sectional view of a main portion illustrating thermal transferring by a thermal transfer roller, FIG. 6C is a longitudinal sectional view of a main portion illustrating a state in which the turned over base material and the intermediate transfer film provided with the print including the print layers are attached to the two-side printer, FIG. 6D is a longitudinal sectional view of a main portion illustrating thermal transferring by a thermal transfer roller and FIG. 6E is a longitudinal sectional view illustrating a sate in which the intermediate transfer roller is separated in a cooling step.
FIG. 7 is a schematic longitudinal sectional view illustrating a lamination order of print layers constituting a main portion of a print in a conventional printing structure of a dial.
FIGs. 8A-8D are schematic views each illustrating a manufacturing step which thermally transfers a print onto a PC sheet by one-side printing in the conventional printing structure of the dial; FIG. 8A is a longitudinal sectional view of a main portion illustrating a state in which a base material and an intermediate transfer film provided with a print having print layers are attached to a one-side printer, FIG. 8B is a longitudinal sectional view of a main portion illustrating thermal transferring by a thermal transfer roller, and FIG. 8C is a longitudinal sectional view illustrating a state in which the base material recurves in a cooling step.

### DETAILED DESCRIPTION OF THE PREFERRED EMBODIMENTS

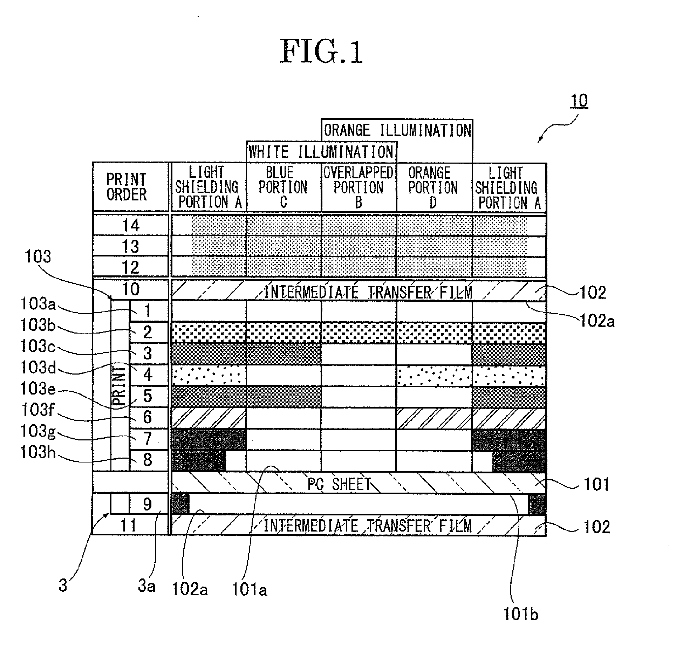

Next, a two-side printing structure, a dial having the same and a printing method of the two-side printing structure according to embodiments of the present invention will be described with reference to FIGs. 1-6.

In addition, the same reference numbers are applied to portions which are the same as or similar to those in the prior art.

At first, the configuration will be described. The two-side printing structure of each of the embodiments is used for a backlight transmissive dial, for example, a dial of an automotive indicator such as a speed meter (not shown) and a tachometer (not shown) disposed near a driver's seat in an automobile.

### [Embodiment 1 ]

Referring to FIGs. 1-5, a dial 10 to which a two-side printing structure of Embodiment 1 is applied and a printing method of the two-side printing structure are illustrated.

At first, the configuration will be described. As illustrated in FIG. 1, the dial 10 of Embodiment 1 includes as a base material a transparent PC sheet 101 having one flat side face (first face) 101 a and another flat side face (second face) 101b as print faces.

The one side face 101a includes a print 103 having a plurality of print layers 103a-103h each having a different color. Each of the print layers 103a-103h is thermally transferred. The print layers 103a-103h are laminated in a state in which parts of the layers are overlapped.

The other side face 101b also includes a print 3 having a single print layer 3a.

If light illuminated from the side of the other side face 101b which is the back side of the PC sheet 101 of the dial 10 transmits to the side of the one side face 101 a which is a surface side of the PC sheet 101 of the dial 10, the light passes through the print layer 3a and each print layer 103a-103h or is reflected by the print layer 3a and each print layer 103a-103h.

On the contrary, in this Embodiment 1, if the light illuminated from the side of the one side face 101a which is the surface side of the PC sheet 101 of the dial 10 transmits to the side of the other side face 10b which is the back side of the PC sheet 101 of the dial 10, the light passes through each print layer 103a-103h and the print layer 3 a.

In this case, in a portion where the print layer 3a is overlapped with any one of the print layers 103a-103h, the colors are mixed to be adjusted to desired colors, and the colors are visualized by a passenger in a passenger compartment provided with the display unit as the colors of the transmissive light of the dial 10.

In Embodiment 1, since the print 103 is applied to the one side face 101a of the PC sheet 101 and the print 3 is applied to the other side face 101b of the PC sheet 101, two PET intermediate transfer films 102, 102 are used.

The print 103 having a plurality of print layers 103a-103h is previously laminated on a transfer face 102a of one intermediate transfer film 102 in a reverse order. The single print layer 3a is previously attached to the transfer face 102a of the other intermediate transfer film 102.

Next, the printing method of the two-side printing structure of Embodiment 1 will be described with reference to printing steps illustrated in FIGs. 5A-5C as a printing method using a two-side thermal transfer printer 5 capable of thermally transferring onto two sides at the same time.

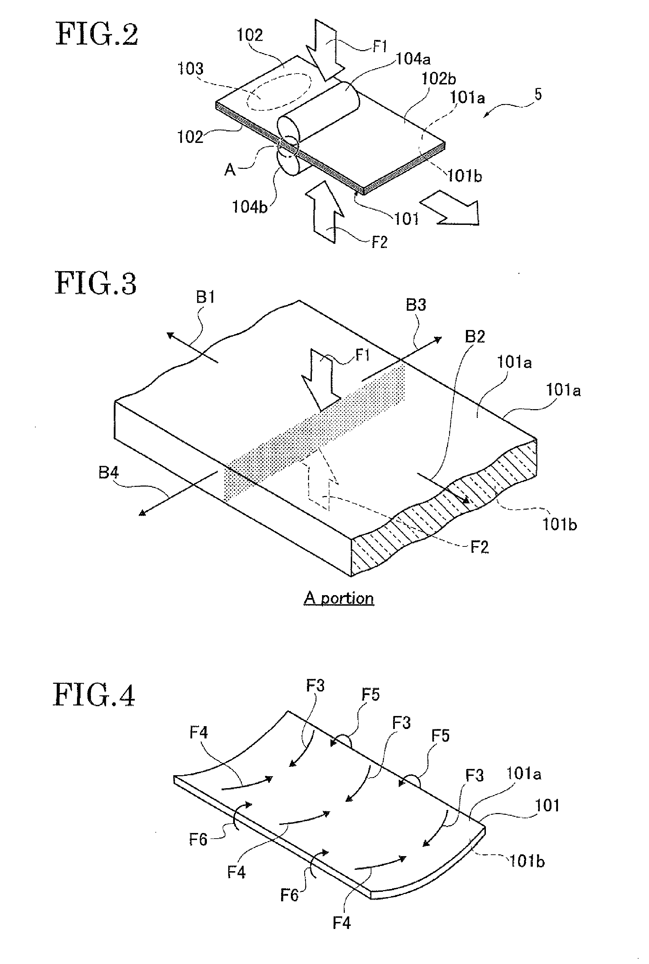

At first, the configuration of the two-side thermal transfer printer 5 for use in this two-side printing will be described. As illustrated in FIGs. 2-4, the two-side thermal transfer printer 5 includes a pair thermal transfer rollers 104a, 104b. The thermal transfer roller 104a is disposed on the side of the one side face 101a of the PC sheet 101 and the thermal transfer rollers 104b is disposed on the side of the other side face 101b of the PC sheet 101. The thermal transfer roller 104a rotates while pressing the PET intermediate transfer film 102 to the one side face 101a and heating the PET intermediate transfer film 102 and the thermal transfer roller 104b rotates while pressing the PET intermediate transfer film 102 to the other side face 101b and heating the PET intermediate transfer film 102, so as to conduct the transfer printing.

Each of the thermal transfer roller 104a, 104b is supported to be rotatable. The two-side thermal transfer printer 5 includes a cylinder device (not shown) which moves in the direction which presses the side of each transfer face 102a, 102a of each intermediate transfer film 102, 102 toward each side face 101a, 101b of the PC sheet 101.

As illustrated in FIGs. 2, 3, the cylinder device in Embodiment 1 can output pressing strengths F1, F2 (F1 = 0.5MPa, F2 = 0.5MPa) in the up and down direction, and the driving direction comes close and separates in the opposing direction. Therefore, each of the pressing strengths F1, F2 from each of the two sides of the top and bottom is applied to the side of each of the side faces 101a, 101b of the PC sheet 101 disposed between the intermediate transfer films 102, 102.

The PC sheet 101 provided between a pair of thermal transfer rollers 104a, 104b relatively moves at a constant speed in the arrow direction in FIG. 2 by a traversing device (not shown), and is heated by the thermal transfer rollers 104a, 104b.

The temperature in the outer circumferential face of each of the thermal transfer rollers 104a, 104b is maintained at about 190°C by the power distribution of an internal heater.

Namely, the surface temperature of the intermediate transfer films 102, 102 with which the outer surfaces of the thermal transfer rollers 104a, 104b have contact, respectively, becomes 150°C or more but lower than 160°C, and is adjusted to exceed 141 °C-149°C which is a glass dislocation point of the PC sheet 101.

In this case, similar to the thin intermediate transfer film 102, the surface temperature of the surface to be transferred which is the surface side of the PC sheet 101 becomes 150°C or more but lower than 160°C.

The temperature of the back side of the PC sheet 101 in the thermal transferring and pressing becomes lower than about 120°C which is lower than 141°C-149°C of a glass dislocation point by adjusting the thickness of the PC sheet 101.

Accordingly, as illustrated in FIG. 2, even if the thermal transfer is performed by the thermal transfer rollers 104a, 104b while pressing from both of the side faces of the PC sheet 101, if the thermal transfer roller 104a is only heated, as illustrated in FIG. 3, the material close to the surface side significantly expands toward the four directions B1-B4 compared to the material close to the back side even though the pressing strength F1 is equal to the pressing strength F2.

Therefore, if the cooling step starts by the separation of the thermal transfer roller 104a, the material close to the surface side of the PC sheet 101 contracts as illustrated in FIG. 4, and the tensile forces F3, F4 act. Thereby, the surface side of the PC sheet 101 may recurve in a concave shape by the tensile forces F3, F4 acting on the side ends.

As described above, factors which determine the recurve amount are mainly the heat amount (temperature and time), the external stress (cylinder pressure) and the material (material and thickness).

In order to reduce the recurve amount, it is necessary for the recurve amount generated on both of the side faces 101a, 101b of the PC sheet 101 to be equal to each other.

Accordingly, in the two-side printing structure of Embodiment 1, as illustrated in FIG. 5A, the print 103 is thermally transferred onto the side face 101 a of the PC sheet 101 as a base material by the transfer roller 104a and the print 3 is thermally transferred onto the side face 101b of the PC sheet 101 as a base material by the thermal transfer roller 104b. Thereby, the print layers 103a-103d are formed on the side face 101a and the print layer 3 a is formed on the side face 101b, and at least a part of the PC sheet 101 operates as a design face of the dial 10.

As illustrated in 5B, the transfer face 102a of the intermediate transfer film 102 provided with the print layers 103a-103d which are transferred onto the side face 101a of the PC sheet 101 provided between the thermal transfer rollers 104a, 104b and the transfer face 102a of the intermediate transfer film 102 provided with the print layer 3 which is transferred onto the side face 101b of the PC sheet 101 provided between the thermal transfer rollers 104a, 104b are simultaneously heated and transferred in a state facing each other.

In this case, in Embodiment 1, the pressing strengths to the opposing direction function between the thermal transfer rollers 104a, 104b, so that the pressure to be applied to the surface side of the PC sheet 101 becomes equal to the pressure to be applied to the back side of the PC sheet 101.

By the not shown traversing device, the thermal transfer rollers 104a, 104b move at a constant speed toward the arrow direction in FIG. 5B, and the intermediate transfer films 102, 102 are thermally pressed to the two-side faces 101a, 101b of the PC sheet 101 by the thermal transfer rollers 104a, 104b, respectively.

The thermal transfer rollers 104a, 104b each having the same temperature simultaneously have contact with the intermediate transfer films 102, 102, respectively, so that the heat amount required for the transferring from the intermediate transfer films 102, 102 is simultaneously applied to the two-side faces 101a, 101b, respectively.

As illustrated in FIG. 5C, since the intermediate transfer films 102, 102 can be separated together with the thermal transfer rollers 104a, 104b from the prints 3, 103 transferred to the two-side faces 101a, 101b, respectively, at the same time, it is possible to simultaneously start the cooling in the two-side faces 101a, 101b.

Next, the function and effect of the two-side printing structure, the dial using the two-side printing structure and the printing method of the two-side printing structure of Embodiment 1 will be described.

In the two-side printing structure of Embodiment 1, the print 103 having the print layers 103a-103d is thermally transferred onto the one side face 101a and the print 3 having the print layer 3 a is thermally transferred onto the other side face 101b.

Therefore, heat and pressing strength are simultaneously applied to the two-side faces 101a, 101b of the PC sheet 101 to be stretched, so that the two-sided faces 101a, 101b contract in the same way in the cooling step.

For this reason, even if the thermal transfer printing is performed, the PC sheet 101 does not recurve and bend.

In the dial 10 and the like in which the design face is formed on the PC sheet 101, since the PC sheet 101 provided with the prints 3, 103 does not recurve and bend, a preferable external appearance including a design face having a desired shape without having an internal stress can be obtained.

In Embodiment 1, the thermal transfer step of the print 103 to the side face 101a of the PC sheet 101 by the thermal transfer roller 104a and the thermal transfer step of the print 3 to the side face 101b of the PC sheet 101 by the thermal transfer roller 104b are simultaneously performed.

Therefore, since the heat and pressing strengths are applied to the two-side faces 101a, 101b at the same time, the stretch and contraction ratios become the same between the two-side faces. Consequently, low sound between a portion which attaches the dial 10 and a portion which supports the dial 10 is not caused, and also cracking is not caused. Accordingly, the generation of the recurve and bending, which deteriorates the external appearance of the design face of the dial 10 after being attached, can be controlled.

### [Embodiment 2]

FIGs. 6A-6E are views each illustrating a two-side printing structure, a dial using the two-side printing structure and a printing method of the two-side printing structure of Embodiment 2.

The same reference numbers are applied to the portions which are the same as those in Embodiment and Embodiment 1.

At first, in the two-side printing structure, a dial 20 having the two-side printing structure of Embodiment 2 and the printing method of the two-side printing structure, since the print is applied to the two-side faces 101a, 101b by independently performing the thermal transfer printing to each of the two-side faces 101a, 101b of the PC sheet 101, a thermal transfer printer 15 having one thermal transfer roller 104 for one surface is used.

A turnover mechanism 106, which can direct the side face 101a or the side face 101b of the PC sheet 101 upward or downward, is provided in the not shown traversing device.

The cylinder device is configured to drive at the same pressure when driving in the direction which presses toward each of the side faces 101a, 101b of the PC sheet 101 even if the thickness of the print 103 provided in the intermediate transfer film 102 is different from the thickness of the print 3 provided in the intermediate transfer film 102.

Next, the function and effect of the two-side printing structure of the dial of Embodiment 2 will be described.

In the two-side printing structure of Embodiment 2 as described above, at first, as illustrated in FIG. 6A, the PC sheet 101 is attached to the thermal transfer printer 15 using one thermal transfer roller 104 and the print 103 having a plurality of print layers 103a-103d has contact with the one side face 101a of the PC sheet 101 from the transfer face 102a of the PET intermediate transfer film 102 in which the print layers 103a-103d are laminated in a reverse order.

Next, as illustrated in FIG. 6B, the thermal transfer roller 104 rotates while pressing from the outside face 102b of the intermediate transfer film 102 in a heated state.

The transfer face 102a of the intermediate transfer film 102 is pressed to the one side face 101a of the softened PC sheet 101.

The print 103 having the printing layers 103a-103d laminated on the transfer face 102a is thereby fixed by pressure to the one side face 101a of the PC sheet 101.

After fixing by applying pressure, as illustrated in FIG. 6C, the thermal transfer roller 104 is removed, and the two-side faces 101a, 101b of the PC sheet 101 are turned over at 180 degrees by using the turnover mechanism 106 of the traversing device, such that the other side face 101b faces the side of the thermal transfer roller 104.

Then, the intermediate transfer film 102 provided with the print 103 to be transferred onto the other side face 101b is attached, and, as illustrated in FIG. 6D, the intermediate transfer film 102 is pressed by the heat of the rotating thermal transfer roller 104 in a heated state.

The relative moving speed of the thermal transfer roller 104 and the PC sheet 101 by the traversing device is a speed which is the same as that in the fixing by pressure to the side of the one side face 101a.

The surface temperature of the intermediate transfer film 102 to which the outer surface of the thermal transfer roller 104 has contact with becomes 150°C or more but lower than 160°C, and is adjusted to be the temperature which is the same as in the transferring of the one side face 101a so as to exceed 141°C-149°C of a glass dislocation point of the PC sheet 101.

Then, as illustrated in FIG. 6E, each of the prints 103, 103 is transferred by removing the intermediate transfer films 102, 102 from the two-side faces 101a, 101b of the softened PC sheet 101.

In the dial 20 of Embodiment 2, the heating temperature, pressure and the like are set at the same conditions in the two-side faces 101a, 101b, so that even if the thermal transfer roller 104 for one surface is used, the thermal transfer print is independently applied to each of the two-side faces 101a, 101b of the PC sheet 101, and the print can be applied to the two-side faces 101a, 101b, and the freedom of design in the design face can be improved.

Since the other structures, function and effect of Embodiment 2 are similar to those in Embodiment and Embodiment 1, the description thereof will be omitted.

Although Embodiment and Embodiments 1, 2 of the present invention have been described above, the present invention is not limited thereto. It should be appreciated that variations may be made in Embodiment and Embodiments 1, 2 described by persons skilled in the art without departing from the scope of the present invention.

For instance, in each of Embodiment and Embodiments 1, 2, the two-side printing structure is described in which the two-side printing is applied to the dial of the automotive indicator such as a speed meter. However, the present invention is not limited thereto. The application field of the present invention is not especially limited. The shape, the amount, the material and the print content of the present invention are not especially limited as long as the present invention can be introduced to, for example, a display surface of a back monitor, a side monitor and a center display and a dial of a combination meter in which various meters such as a tachometer and an assistant display meter are combined, and a member to be printed, which has at least in a portion a design face.

In Embodiments of the present invention, the pressing strengths F1, F2 (F1 = 0.5MPa, F2 = 0.5MPa) to be applied by the cylinder device are set to be the same. However, the pressing strength is not limited to thereto. The heating temperature by a heater, the number of rollers, the shape, the size and the material are not especially limited as long as the print can be thermally transferred.

In the present embodiments, the print 3 of the other side face 101b of the PC sheet 101 has a single print layer; however, a plurality of print layers can be provided on the other side face 101b.

Moreover, in the present embodiment, the temperature of the thermal transfer rollers 104a is set to be the same as the temperature of the thermal transfer roller 104b; however, the temperature of the thermal transfer rollers 104a, 104b can be individually controlled. In this case, the temperature of the thermal transfer roller 104b on the side of the other side face 101b of the PC sheet 101 can be controlled according to the temperature of the thermal transfer roller 104a on the side of the one side face 101a of the PC sheet 101. Also, the temperature of the thermal transfer roller 104b on the side of the other side face 101b can be controlled according to the contraction degree of the PC sheet 101.

According to the embodiments of the present invention, the prints are thermally transferred onto the two-side faces of the base material, respectively.

By this configuration, the heat and the pressing strength are applied to the two-side faces of the base material so that the two-side faces are stretched. Therefore, the two-side faces contact in the same way in the cooling step.

Accordingly, even if the thermal transfer printing is performed, the base material does not recurve and bend.

According to the embodiments of the present invention, even if the design face is provided at least in a part of the base material having prints, a preferable external appearance of the design face, which does not have bending such as recurve can be obtained.

According to the embodiments of the present invention, the thermal transfer step which performs the printing to the two-side faces of the base material is simultaneously performed on the two-side faces of the base material.

Therefore, since the heat and the pressure strength are simultaneously applied, the same stretch ratio is obtained in the two-side faces, so that the generation of the recurve and bending can be controlled.

According to the embodiments of the present invention, since the heating temperature and the pressure strength are set by the same conditions on the two-side faces, the thermal transfer printing can be independently applied to each of the side faces of the base material even if the thermal transfer roller for one surface is used, so that the printing can be performed to both of the side faces.

## Claims

1. A two-side printing structure, comprising:
a base material (101) including a first face (101a) and a second face (101b) located on a side opposite to the first face (101a);
a print (103) having a print layer provided on the first face (101a) of the base member (101) by thermal transfer printing; and
a print (3) having a print layer provided on the second face (101b) of the base member (101) by thermal transfer printing.

2. The two-side printing structure according to Claim 1, wherein the print (103) having the print layer provided on the first face (101a) of the base member (101) by the thermal transfer printing includes a plurality of print layers (103a-103h) having the print layer.

3. The two-side printing structure according to Claim 1 or Claim 2, wherein the print layer provided on the second face (101b) of the base member (101) by the thermal transfer printing is a single layer (3a).

4. A dial using the two-side printing structure according to Claim 1, wherein at least one of at least a part of the first face (101a) and at least a part of the second face (101b) is used as a design face.

5. A printing method of a two-side printing structure, comprising the steps of:
providing a print (103) on a first face (101a) of a base material (101) by thermal transfer printing; and
providing a print (3) on a second face (101b) located on a side opposite to the first face of the base material (101) by thermal transfer printing.

6. The printing method of a two-side printing structure according to claim 5, wherein the print (103) is provided on the first face (101a) and the print (3) is provided on the second face (101b) by individually performing the thermal transfer printing on the first face (101a) and the second face (101b) of the base material (101).

7. The printing method of a two-side printing structure according to claim 5, wherein the thermal transfer printing is performed on the second face (101b) at the same time as the thermal transfer printing on the first face (101a).

8. The printing method of a two-side printing structure according to claim 5, wherein the thermal transfer printing is performed on the second face (101b) after performing the thermal transfer printing on the first face (101a).

9. The printing method of a two-side printing structure according to claim 5, wherein a heat temperature to be applied to the second face (101b) in the thermal transfer printing on the second face (101b) is the same as a heating temperature to be applied to the first face (101a) in the thermal transfer printing on the first face (101a).

10. The printing method of a two-side printing structure according to claim 5, wherein when performing the thermal transfer printing on the first face (101a), the first face is pressed, and when performing the thermal transfer printing on the second face (101b), the second face is pressed by a pressure which is the same as a pressure to the first face.
